# EUROPÄISCHE PATENTSCHRIFT

(11) **EP 3 305 432 B1**
(45) Veröffentlichungstag und Bekanntmachung des Hinweises auf die Patenterteilung: **09.02.2022**
(21) Anmeldenummer: 16193005.2
(22) Anmeldetag: 10.10.2016
(51) Int. Cl.: B21D 51/26, B21D 51/44, B65D 43/00, B65B 7/28, G01C 5/00, B21D 51/30

(54) **PRÜFMITTEL FÜR DOSENVERSCHLIESSER**
TESTING MEAN FOR CAN CLOSER
INSTRUMENT DE VÉRIFICATION POUR UN DISPOSITIF DE FERMETURE DE BOÎTE

(43) Veröffentlichungstag der Anmeldung: 11.04.2018
(73) Patentinhaber: Xolution GmbH, 81737 München (DE)
(72) Erfinder: Bratsch, Christian, 5020 Salzburg (AT)
(74) Vertreter: Grünecker Patent- und Rechtsanwälte PartG mbB

(56) Entgegenhaltungen:
- EP-A1- 1 726 529
- JP-A- 2000 271 687
- JP-U- S51 163 454
- US-A- 4 218 984
- US-A- 4 518 094

## Beschreibung

### Gebiet der Erfindung

Die Erfindung betrifft einen Prüfdeckel zum Prüfen des Hubs einer Halteplatte eines Verschließkopfes eines Dosenverschließers.

### Stand der Technik

Bei der Abfüllung von Getränkedosen durchlaufen die Dosen nach der Befüllung einen Dosenverschließer, wobei die befüllten Dosenkörper über einen Zuführweg einlaufen und über einen weiteren Zuführweg Dosendeckel einlaufen. Der Dosenverschließer weist üblicherweise mehrere karussellförmig angeordnete gleichartige Stationen auf, in denen jeweils eine Dose mit einem Deckel verschlossen wird. Die Deckel werden dabei auf die Dosen geführt und mit einer Halteplatte eines Verschließkopfes darauf gehalten. Dieses Halten dient auch der Fixierung der Dosen gegen ein Ausbrechen aus der von den Dosen in dem Verschließer durchlaufenen Kreisbahn aufgrund der Zentrifugalkraft. In dem Verschließer werden dabei die Dosen mit dem Deckel randseitig gefalzt und somit verschlossen. In der Regel dreht sich dabei die Dose mit dem Deckel zusätzlich um die eigene Symmetrieachse.

Die Halteplatten weisen dabei jeweils einen voreingestellten Hub auf, der vor in Betriebnahme des Verschließers für einen bestimmte Dosensorte justiert werden muss. Eine genaue Einstellung des Hubs ist deshalb wichtig, weil bei einem zu geringen Hub der von oben auf den Deckel zukommenden Halteplatte nur eine ungenügende Fixierung des Dosenkörpers und des Deckels in der jeweiligen Station erfolgt. Wenn der Hub zu groß ist, erfolgt eine Verbiegung des Deckels, die ebenfalls nicht erwünscht ist. Bei bestimmten Deckelarten kann es sogar zu einer Zerstörung von im Deckel angeordneten Öffnungseinrichtungen zum Öffnen der Dose durch einen Konsumenten kommen.

Der Hub der Halteplatten muss daher regelmäßig kontrolliert und ggf. nachjustiert werden. Eine Kontrolle ist aber nach dem Stand der Technik nur unmittelbar durch direktes Messen der Verschiebung der Halteplatte möglich, was mit einer Unterbrechung des Abfüllbetriebs verbunden ist und einen Maschinenstillstand von mehreren Stunden verursachen kann.

Die JP-A-2000271687 offenbart ein Verfahren zum Prüfen der Kraft die auf der Unterseite einer Dose während eines Betriebs eines Dosenverschließers ausgeübt wird, wobei eine Prüfdose bereitgestellt wird.

### Beschreibung der Erfindung

Aufgabe der Erfindung ist es, die genannten Nachteile zumindest teilweise zu überwinden.

Diese Aufgabe wird gelöst durch einen Prüfdeckel nach Anspruch 1.

Der erfindungsgemäße Prüfdeckel ist zum Prüfen des Hubs einer Halteplatte eines Verschließkopfes eines Dosenverschließers für Dosen geeignet, insbesondere für Getränkedosen, wobei der Prüfdeckel umfasst: einen Randabschnitt, der zum Auflegen auf einen Dosenrand vorgesehen ist, insbesondere weiterhin zum Falzen mit dem Dosenrand; und einen Innenabschnitt, in dem ein oder mehrere Prüfstifte kraftschlüssig angeordnet sind, wobei die Prüfstifte während eines Hubvorgangs der Halteplatte in Hubrichtung durch die Halteplatte verschiebbar sind.

Der erfindungsgemäße Prüfdeckel hat den Vorteil, dass während des laufenden Betriebs des Dosenverschließers eine Überprüfung des Hubs der Halteplatten erfolgen kann. Der Prüfdeckel wird anstelle des eigentlich für diese Dose vorgesehenen Deckels verwendet. Der Randbereich des Prüfdeckels gleicht deshalb dem Randbereich Deckels für diese Dose und wird entsprechend mit dem Randbereich des Dosenkörpers gefalzt. Die Halteplatte drückt auf den oder die Prüfstifte und schiebt sie etwas weiter hinein. Nach Durchlaufen des Verschließers wird die mit dem Prüfdeckel verschlossene Dose herausgeleitet und einer Inspektion durch Bedienpersonal unterzogen. Wenn Stifte gar nicht verschoben wurden ist der eingestellte Hub der Halteplatte zu gering und falls ein oder mehrere Stifte ganz hineingeschoben wurden, so dass deren Enden mit der Oberfläche des Prüfdeckels abschließen, ist der eingestellte Hub zu groß, es könnte beim Verschließen der Dosen zu einer Verbiegung oder gar Beschädigung der Deckeloberfläche kommen. Sind die Prüfstifte hingegen nur teilweise hineingedrückt worden, so ist die Einstellung des Hubs in Ordnung, eine Unterbrechung des Betriebs zur Messung und Einstellung des Hubs ist nicht notwendig.

Der erfindungsgemäße Prüfdeckel kann dahingehend weitergebildet werden, dass der Innenabschnitt als Einsatz vorgesehen sein kann, der in den Randabschnitt eingesetzt ist, insbesondere formschlüssig und/oder kraftschlüssig. Dies hat den Vorteil, dass ein herkömmlicher Deckel als Ausgangsprodukt für den Prüfdeckel verwendet werden kann und ein für den Einsatz passender Ausschnitt herausgenommen wird, wobei jedoch der Randbereich, der für die Verbindung mit einem Dosenkörper vorgesehen ist, als Randbereich des Prüfdeckels verbleibt.

Dies kann wiederum so weitergebildet werden, dass der Einsatz aus dem Randabschnitt entnehmbar sein kann, insbesondere nach Durchführung der Prüfung. Somit ist eine einfache Prüfung der Stellung der Prüfstifte möglich, insbesondere auch in Richtung der Innenseite der Dose nach einem Falzen des Randbereichs des Prüfdeckels mit einem Dosenkörper.

Gemäß einer anderen Weiterbildung kann der Innenabschnitt aus Kunststoff gefertigt sein und/oder können die Prüfstifte aus Kunststoff gefertigt sein.

Eine andere Weiterbildung besteht darin, dass die Prüfstifte in einer Anordnung vorgesehen sind, die ein oder mehrere Reihen von Prüfstiften umfasst. Auf diese Weise kann der Hub der Halteplatte über den Querschnitt geprüft werde, so dass auch eine Winkelstellung überprüft werden kann und somit beispielsweise eine nicht erwünschte Schrägstellung festgestellt werden kann.

Dies kann dahingehend weitergebildet werden, dass die Anordnung der Prüfstifte zwei gekreuzte Reihen von Prüfstiften umfassen kann, wobei die zwei Reihen insbesondere in einem rechten Winkel zueinander angeordnet sind. Dies ergibt eine vorteilhafte Verteilung der Prüfstifte über den Prüfdeckel.

Gemäß einer anderen Weiterbildung kann der Innenabschnitt einen Verstärkungsbereich aufweisen, in dem die Prüfstifte vorgesehen sind. Dies ist von Vorteil, weil die Prüfstifte dann sicher geführt werden und beispielsweise ein Umknicken vermieden werden kann.

Eine andere Weiterbildung besteht darin, dass die Prüfstifte Markierungen zum Anzeigen der Position aufweisen, insbesondere Farb- und/oder Strichmarkierungen. Dies erleichtert ein Ablesen bzw. Erkennen der Position der Prüfstifte, sowohl vor als auch nach dem Durchlaufen des Dosenverschließers.

Die erfindungsgemäße Aufgabe wird weiterhin gelöst durch ein Verfahren nach Anspruch 9.

Das erfindungsgemäße Verfahren zum Prüfen des Hubs einer Halteplatte eines Verschließkopfes eines Dosenverschließers für Dosen, insbesondere für Getränkedosen, während eines Betriebs des Dosenverschließers, umfasst die folgenden Schritte: Bereitstellen eines erfindungsgemäßen Prüfdeckels oder einer dessen Weiterbildungen innerhalb eines Stapels von Dosendeckeln in einem Zuführweg zum Dosenverschließer; Andrücken des Prüfdeckels an einen Dosenkörper mit der Halteplatte des Verschließkopfes; Entnehmen derjenigen Dose mit dem Prüfdeckel aus einem Ausleitweg für verschlossene Dosen; und Überprüfen der Stellung der Prüfstifte des Prüfdeckels.

Die Vorteile des erfindungsgemäßen Verfahrens und dessen Weiterbildungen entsprechen - wenn nicht anders angegeben - jenen des erfindungsgemäßen Prüfdeckels.

Gemäß einer Weiterbildung des erfindungsgemäßen Verfahrens kann nach dem Schritt des Andrückens der folgende weitere Schritt vorgesehen sein: Falzen eines peripheren Teils des Randabschnitts mit einem Randbereich des Dosenkörpers.

Eine andere Weiterbildung besteht darin, dass ein Entnehmen des Einsatzes aus dem Randabschnitt des Prüfdeckels vorgesehen sein kann.

Gemäß einer anderen Weiterbildung kann der Dosenverschließer mehrere Verschließköpfe aufweist und zum Prüfen des Hubs der jeweiligen Halteplatte kann eine entsprechende Anzahl von Prüfdeckeln unmittelbar aufeinander folgend in dem Zuführweg bereitgestellt werden.

Eine andere Weiterbildung besteht darin, dass ein Justieren des Hubs einer oder mehrerer Halteplatten erfolgt, wenn bei wenigstens einem Prüfstift ein Überschreiten eines vorgegebenen Grenzwerts der Verschiebung festgestellt wird.

Gemäß einer anderen Weiterbildung kann der Schritt des Überprüfens der Stellung der Prüfstifte des Prüfdeckels den folgenden Schritt umfassen: Überprüfen der Stellung von auf den Prüfstiften angeordneten Markierungen zum Anzeigen der Position, insbesondere von Farb- und/oder Strichmarkierungen.

Die genannten Weiterbildungen können einzeln eingesetzt oder wie beansprucht geeignet miteinander kombiniert werden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Kurzbeschreibung der Zeichnungen

- Fig. 1: zeigt eine Ausführungsform des erfindungsgemäßen Prüfdeckels.
- Fig. 2: zeigt einen Querschnitt des Prüfdeckels gemäß Fig. 1.
- Fig. 3: zeigt schematisch das erfindungsgemäße Prüfverfahren.

### Ausführungsformen

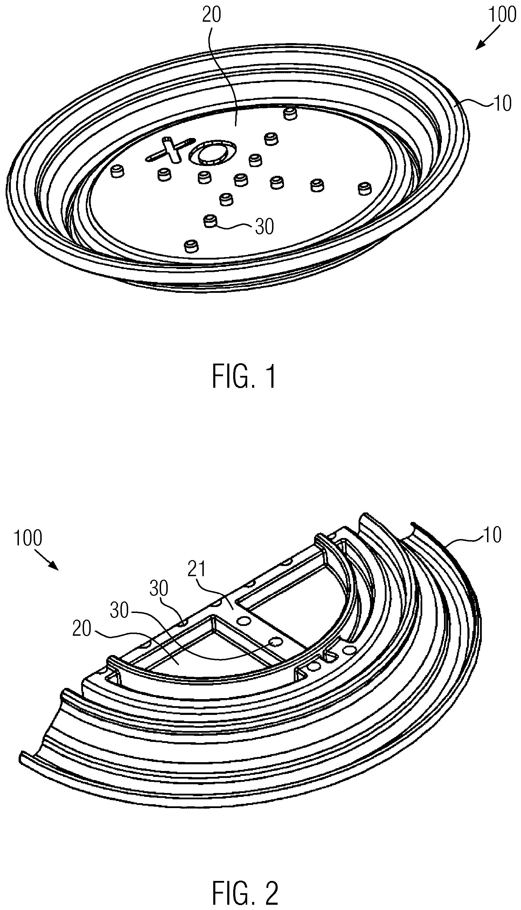

Fig. 1 zeigt eine Ausführungsform des erfindungsgemäßen Prüfdeckels.

Der erfindungsgemäße Prüfdeckel 100 ist zum Prüfen des Hubs einer Halteplatte eines Verschließkopfes eines Dosenverschließers für Getränkedosen geeignet, wobei der Prüfdeckel 100 gemäß dieser Ausführungsform umfasst: einen Randabschnitt 10, der zum Auflegen auf einen Dosenrand vorgesehen ist, insbesondere weiterhin zum Falzen mit dem Dosenrand; und einen Innenabschnitt 20, in dem ein oder mehrere Prüfstifte 30 kraftschlüssig angeordnet sind, wobei die Prüfstifte 30 während eines Hubvorgangs der Halteplatte in Hubrichtung durch die Halteplatte verschiebbar sind.

Der Innenabschnitt 20 ist als Einsatz 20 vorgesehen. Sowohl der Einsatz 20 als auch die Prüfstifte 30 sind aus Kunststoff gefertigt. Die Anordnung der Prüfstifte 30 umfasst zwei gekreuzte Reihen von Prüfstiften 30, wobei die zwei Reihen in einem rechten Winkel zueinander angeordnet sind.

Fig. 2 zeigt einen Querschnitt des Prüfdeckels 100 gemäß Fig. 1.

Im Querschnitt ist ersichtlich, dass der Randbereich 10 des Prüfdeckels 100 entsprechend einem normalerweise für die Dosen vorgesehenen Deckelrand geformt ist, so dass in einem Verschließvorgang der Randbereich 10 mit dem oberen Rand der Dose gefalzt werden kann. Es ist ebenfalls erkennbar, dass in dieser Ausführungsform der Einsatz 20 einen Verstärkungsbereich 21 aufweist, in dem die Prüfstifte 30 vorgesehen sind.

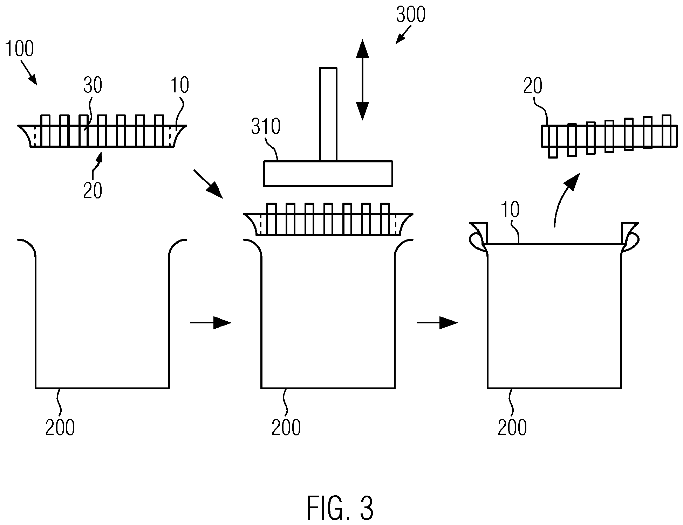

In Fig. 3 ist eine schematische Darstellung des erfindungsgemäßen Prüfverfahrens gezeigt.

Ein Prüfdeckel 100 und eine Dosenkörper 200 werden nach einer Befüllung des Dosenkörpers 200 (beispielsweise mit einem Getränk) auf jeweiligen Zuführwegen einem nachfolgenden Verschließer 300 zugeführt. Der Verschließer weist neben den eigentlichen zum Falzen des Randes vorgesehenen Vorrichtungen weiterhin eine Halteplatte 310 auf, mit dem die Deckel und hier jetzt auch der Prüfdeckel 100 auf dem Dosenkörper 200 gehalten werden. Dabei werden Prüfstifte 30 des Prüfdeckels 100 durch die Halteplatte verschoben. Der Randbereich 10 des Prüfdeckels 30 wird mit dem oberen Rand des Dosenkörpers gefalzt. Danach kann der Einsatz 20 aus dem Prüfdeckel 100 entnommen werden und die Lage der einzelnen Prüfstifte 30 in untersucht werden.

Falls zu große Abweichungen von einem optimalen Hub der Halteplatte 310 festgestellt werden, muss der Verschließer 300 angehalten werden und der Hub neu justiert werden.

Die dargestellten Ausführungsformen sind lediglich beispielhaft und der vollständige Umfang der vorliegenden Erfindung wird durch die Ansprüche definiert.

## Patentansprüche

1. Prüfdeckel (100) zum Prüfen des Hubs einer Halteplatte eines Verschließkopfes eines Dosenverschließers für Dosen, insbesondere für Getränkedosen, wobei der Prüfdeckel umfasst:
einen Randabschnitt (10), der zum Auflegen auf einen Dosenrand vorgesehen ist, insbesondere weiterhin zum Falzen mit dem Dosenrand; und
einen Innenabschnitt (20), in dem ein oder mehrere Prüfstifte (30) kraftschlüssig angeordnet sind, wobei die Prüfstifte während eines Hubvorgangs der Halteplatte in Hubrichtung durch die Halteplatte relativ zum Innenabschnitt verschiebbar sind.

2. Prüfdeckel nach Anspruch 1, wobei der Innenabschnitt als Einsatz vorgesehen ist, der in den Randabschnitt eingesetzt ist, insbesondere formschlüssig und/oder kraftschlüssig eingesetzt ist.

3. Prüfdeckel nach Anspruch 2, wobei der Einsatz aus dem Randabschnitt entnehmbar ist, insbesondere nach Durchführung der Prüfung.

4. Prüfdeckel nach einem der Ansprüche 1 bis 3, wobei der Innenabschnitt aus Kunststoff gefertigt ist und/oder wobei die Prüfstifte aus Kunststoff gefertigt sind.

5. Prüfdeckel nach einem der Ansprüche 1 bis 4, wobei die Prüfstifte in einer Anordnung vorgesehen sind, die ein oder mehrere Reihen von Prüfstiften umfasst.

6. Prüfdeckel nach Anspruch 5, wobei die Anordnung der Prüfstifte zwei gekreuzte Reihen von Prüfstiften umfasst, wobei die zwei Reihen insbesondere in einem rechten Winkel zueinander angeordnet sind.

7. Prüfdeckel nach einem der Ansprüche 1 bis 6, wobei der Innenabschnitt einen Verstärkungsbereich (21) aufweist, in dem die Prüfstifte vorgesehen sind.

8. Prüfdeckel nach einem der Ansprüche 1 bis 7, wobei die Prüfstifte Markierungen zum Anzeigen der Position aufweisen, insbesondere Farb- und/oder Strichmarkierungen.

9. Verfahren zum Prüfen des Hubs einer Halteplatte eines Verschließkopfes eines Dosenverschließers für Dosen, insbesondere für Getränkedosen, während eines Betriebs des Dosenverschließers, wobei das Verfahren die Schritte umfasst:
Bereitstellen eines Prüfdeckels nach einem der Ansprüche 1 bis 7 innerhalb eines Stapels von Dosendeckeln in einem Zuführweg zum Dosenverschließer;
Andrücken des Prüfdeckels an einen Dosenkörper mit der Halteplatte des Verschließkopfes;
Entnehmen derjenigen Dose mit dem Prüfdeckel aus einem Ausleitweg für verschlossene Dosen; und
Überprüfen der Stellung der Prüfstifte des Prüfdeckels.

10. Verfahren nach Anspruch 9, wobei nach dem Schritt des Andrückens der folgende weitere Schritt vorgesehen ist:
Falzen eines peripheren Teils des Randabschnitts mit einem Randbereich des Dosenkörpers.

11. Verfahren nach Anspruch 9 oder 10, mit dem weiteren Schritt:
Entnehmen des Einsatzes aus dem Randabschnitt des Prüfdeckels.

12. Verfahren nach einem der Ansprüche 9 bis 11, wobei der Dosenverschließer mehrere Verschließköpfe aufweist und zum Prüfen des Hubs der jeweiligen Halteplatte eine entsprechende Anzahl von Prüfdeckeln unmittelbar aufeinander folgend in dem Zuführweg bereitgestellt werden.

13. Verfahren nach einem der Ansprüche 9 bis 12, mit dem weiteren Schritt:
Justieren des Hubs einer oder mehrerer Halteplatten wenn bei wenigstens einem Prüfstift ein Überschreiten eines vorgegebenen Grenzwerts der Verschiebung festgestellt wird.

14. Verfahren nach einem der Ansprüche 9 bis 13, wobei der Schritt des Überprüfens der Stellung der Prüfstifte des Prüfdeckels umfasst:
Überprüfen der Stellung von auf den Prüfstiften angeordneten Markierungen zum Anzeigen der Position, insbesondere von Farb- und/oder Strichmarkierungen.

## Claims

1. A testing lid (100) for testing the stroke of a holding plate of a closure head of a can closing device for cans, in particular beverage cans, the testing lid comprising:
an edge portion (10) provided for positioning onto a can edge, in particular for additional crimping with the can edge; and
an inner portion (20), in which one or a plurality of testing pins (30) are arranged in a force-fitting manner, the testing pins being displaceable relative to the inner portion by the holding plate in the direction of stroke while a stroke of the holding plate is taking place.

2. The testing lid according to claim 1, wherein the inner portion is provided as an insert, which is inserted in the edge portion, in particular in a form-fitting and/or force-fitting manner.

3. The testing lid according to claim 2, wherein the insert can be removed from the edge portion, in particular after testing has been carried out.

4. The testing lid according to one of the claims 1 to 3, wherein the inner portion is made of plastic and/or wherein the testing pins are made of plastic.

5. The testing lid according to one of the claims 1 to 4, wherein the testing pins are provided in an arrangement comprising one or a plurality of rows of testing pins.

6. The testing lid according to claim 5, wherein the arrangement of the testing pins comprises two crossed rows of testing pins, in particular wherein the two rows are arranged at right angles to one another.

7. The testing lid according to one of the claims 1 to 6, wherein the inner portion comprises a reinforced area (21), in which the testing pins are provided.

8. The testing lid according to one of the claims 1 to 7, wherein the testing pins have markings for indicating the position, in particular color and/or line markings.

9. A method of testing the stroke of a holding plate of a closure head of a can closing device for cans, in particular for beverage cans, during operation of the can closing device, the method comprising the following steps:
providing a testing lid according to one of the claims 1 to 7 within a stack of can lids on a feed path to the can closing device;
pressing the testing lid onto a can body with the holding plate of the closure head;
removing the can with the testing lid from a discharge path for closed cans; and
examining the position of the testing pins of the testing lid.

10. The method according to claim 9, wherein, after the step of pressing-on, the following additional step is provided:
crimping a peripheral part of the edge portion with an edge portion of the can body.

11. The method according to claim 9 or 10, comprising the further step of:
removing the insert from the edge portion of the testing lid.

12. The method according to one of the claims 9 to 11, wherein the can closing device comprises a plurality of closure heads and, for testing the stroke of the respective holding plate, a suitable number of testing lids is provided on the feed path in immediate succession.

13. The method according to one of the claims 9 to 12, comprising the further step of:
adjusting the stroke of one or of a plurality of holding plates, if it is detected that at least one testing pin exceeds a predetermined limit value of displacement.

14. The method according to one of the claims 9 to 13, wherein the step of testing the position of the testing pins of the testing lid comprises:
checking the position of markings, in particular of color and/or line markings, arranged on the testing pins for indicating the position.

## Revendications

1. Couvercle de vérification (100) permettant de vérifier la course d'une plaque de maintien d'une tête de fermeture d'un dispositif de fermeture de boîtes, en particulier de canettes, dans lequel le couvercle de vérification comprend
une section de bord (10) destinée à être placée sur un bord de boîte, en particulier à être en outre pliée avec le bord de boîte ; et
une section intérieure (20) au sein de laquelle une ou plusieurs broche(s) de vérification (30) sont agencées de manière à être verrouillées par complémentarité de force, dans lequel les broches de vérification peuvent être déplacées par rapport à la section intérieure par la plaque de maintien pendant une opération de course de la plaque de maintien dans la direction de course.

2. Couvercle de vérification selon la revendication 1, dans lequel la section intérieure est fournie sous forme d'insert inséré dans la section de bordure, en particulier inséré de manière à être verrouillé par complémentarité de forme et/ou par complémentarité de force.

3. Couvercle de vérification selon la revendication 2, dans lequel l'insert peut être retiré de la section de bord, en particulier après la mise en œuvre de la vérification.

4. Couvercle de vérification selon l'une quelconque des revendications 1 à 3, dans lequel la section intérieure est en matière plastique et/ou dans lequel les broches de vérification sont en matière plastique.

5. Couvercle de vérification selon l'une quelconque des revendications 1 à 4, dans lequel les broches de vérification sont fournies selon un agencement comprenant une ou plusieurs rangée(s) de broches de vérification.

6. Couvercle de vérification selon la revendication 5, dans lequel l'agencement des broches de vérification comprend deux rangées croisées de broches de vérification, dans lequel les deux rangées sont agencées en particulier à angle droit l'une par rapport à l'autre.

7. Couvercle de vérification selon l'une quelconque des revendications 1 à 6, dans lequel la section intérieure présente une région de renforcement (21) au sein de laquelle sont fournies les broches de vérification.

8. Couvercle de vérification selon l'une quelconque des revendications 1 à 7, dans lequel les broches de vérification présentent des repères permettant d'indiquer la position, en particulier des repères sous forme de couleur et/ou de hachures.

9. Procédé permettant de vérifier la course d'une plaque de maintien d'une tête de fermeture d'un dispositif de fermeture de boîtes destiné à des boîtes, en particulier à des canettes, pendant le fonctionnement du dispositif de fermeture de boîtes, dans lequel le procédé comprend les étapes consistant à :
fournir un couvercle de vérification selon l'une quelconque des revendications 1 à 7 à l'intérieur d'une pile de couvercles de boîtes sur un chemin d'alimentation menant au dispositif de fermeture de boîtes ;
presser le couvercle de vérification contre un corps de boîte avec la plaque de maintien de la tête de fermeture ;
retirer la boîte munie du couvercle de vérification d'un chemin de sortie destiné aux boîtes fermées ; et
vérifier la position des broches de vérification du couvercle de vérification.

10. Procédé selon la revendication 9, dans lequel l'étape supplémentaire ci-dessous est prévue après l'étape de pressage :
plier une partie périphérique de la section de bord avec une section de bord du corps de boîte.

11. Procédé selon la revendication 9 ou 10, comprenant en outre l'étape consistant à :
retirer l'insert de la section de bord du couvercle de vérification.

12. Procédé selon l'une quelconque des revendications 9 à 11, dans lequel le dispositif de fermeture de boîtes présente plusieurs têtes de fermeture et un nombre correspondant de couvercles de vérification sont fournis de manière à se succéder immédiatement sur le chemin d'alimentation afin de vérifier la course de la plaque de maintien respective.

13. Procédé selon l'une quelconque des revendications 9 à 12, avec l'étape supplémentaire consistant à :
ajuster la course d'une ou plusieurs plaque(s) de maintien si un dépassement d'une valeur limite prédéfinie du déplacement est constaté pour au moins une broche de vérification.

14. Procédé selon l'une quelconque des revendications 9 à 13, dans lequel l'étape de vérification de la position des broches de vérification du couvercle de vérification comprend l'étape consistant à :
vérifier la position des repères, en particulier des repères sous forme de couleur et/ou de hachures, agencés sur les broches de vérification et permettant d'indiquer la position.
